# EUROPEAN PATENT SPECIFICATION

(11) **EP 3 221 023 B1**
(45) Date of publication and mention of the grant of the patent: **18.12.2019**
(21) Application number: 15861480.0
(22) Date of filing: 16.11.2015
(51) Int. Cl.: B01D 21/02, B65D 88/74, B65D 88/76, B65D 30/02, E03C 1/266, E03F 5/14, E03F 5/16, B65D 90/10, B65D 90/00, B65D 90/02, E03C 1/00

(54) **FOOD-WASTE TANK FOR THE SEPARATION OF FOOD WASTE FROM WATER**
BEHÄLTER FÜR LEBENSMITTELABFÄLLE ZUR TRENNUNG VON SPEISERESTEN AUS WASSER
BAC DE DÉCHETS ALIMENTAIRES PERMETTANT LA SÉPARATION DE DÉCHETS ALIMENTAIRES DE L'EAU

(30) Priority: 19.11.2014 SE 1451391; 14.09.2015 SE 1551168
(43) Date of publication of application: 27.09.2017
(73) Proprietor: Rensa Entreprenad Sverige AB, 187 12 Täby (SE)
(72) Inventor: JANSSON, Mikael, S-185 94 Vaxholm (SE)
(74) Representative: Noréns Patentbyrå AB
(86) International application number: PCT/SE2015/051227
(87) International publication number: WO 2016/080892

(56) References cited:
- EP-A2- 1 533 252
- WO-A1-2013/158025
- CN-A- 1 928 273
- DE-A1- 2 613 386
- DE-A1- 2 837 554
- DE-U1- 9 312 017
- US-A- 5 494 183
- US-A- 5 816 435
- US-A1- 2010 326 908
- US-A1- 2011 079 669

## Description

The present invention relates to a food-waste tank for the separation of food waste and fat from water and its collection during processing in dish-washing installations, in particular in restaurants and industrial kitchens.

It is an environmental objective that at least 35% of food waste from households and premises that handle food is to be recovered through biological treatment. Currently, most collection of food waste takes place from restaurants in vessels or sacks that are subsequently transported to pretreatment facilities, and onwards to biogas production. In cases in which the restaurants are not participants in the collection system, the mixed waste is sent to combustion. As a supplement to the collection of food waste, permission has been granted at least in some locations for individual households to install a food waste mill connected directly to the waste-water system, which is a simple way to treat food waste and one that does not require vehicular transport. There is a demand from industrial kitchens and restaurants to use food waste mills, not only to avoid the heavy lifting of sacks that are to be carried or transported to waste-storage rooms (which in turn must be kept clean in order to avoid offensive smells), but also to be able to use an efficient and environmentally sensitive method of treating food waste. Municipal waste-treatment plants are major producers of biogas used as fuel for vehicles and an addition of organic material from this type of food waste would be able to contribute to increasing the production of biogas.

It is, as has been mentioned above, permitted in certain locations to connect a food waste mill to the municipal waste-water network, but in the case of the treatment of food waste from restaurants and industrial kitchens, it is often considered that the volumes would be so concentrated that the existing waste-water networks would not be able to cope with such an increased mixing in of food waste. This would lead to far too high levels of suspended food waste and fat in the waste water for the existing waste-water networks and waste-treatment plants to be able to cope with. It has, therefore, been suggested that it should be possible for the waste to be collected in closed tanks, such that it can be transported with slurry tankers. The problem, however, is that it is a case of such large volumes of water with mixed-in food waste that it would not be economically defensible with removal in this manner.

A system for the handling of food waste in association with dish-washing installations has previously been presented by the applicant who is submitting the present application, and a patent for the solution has been issued in Sweden with number 1250383-5, publication number SE 536 422 C2.

One purpose of the present invention, therefore, is to propose a food-waste tank for the treatment of food waste in connection with dish-washing installations in restaurants, industrial kitchens and the food industry, where the main principles of the patent referred to above are used and make it easier to install the tank.

The above-mentioned purpose is achieved with a food-waste tank according to claim 1 comprising at least two chambers located one after the other separated by a separating wall and comprising a first inlet for food waste mixed with water and a second inlet principally for dish-washing water without food waste. The food-waste tank is formed by an extended double-walled pipe formed by an element of duct, preferably square, wound as a screw, such that one side of the sides of the element of duct forms the inner surface of the double walled pipe, and the opposite side forms the outer surface of the pipe, while the intermediate sides are glued or welded to each other, and with an end wall at each end that seals the tank, and an internal separating wall that extends essentially over the complete diameter of the tank, dividing the food-waste tank into two chambers, one of which follows the other.

It is preferable that such a food-waste tank that is formed of a double-walled pipe be made of polyethylene, or another plastic material, with reinforcements arranged between the two walls in the double-walled pipe, of the type that is used for, for example road culverts, and that demonstrate such a rigidity and strength that a food-waste tank designed in this way can be installed in the ground without requiring that a special pressure-equalisation slab be cast over the tank. Such a tank has also such an integral rigidity and integral strength that it can also be installed on a frame on, for example, a floor without any further measures being required to ensure the stability of the tank.

In US 2010/326908 A1 is described a wastewater treatment system, including a tank having its inside divided into several chambers by means of partition walls inside the tank. Even if being provided with several chambers it is not provided with a separate inlet for dish-washing water, and therefore food waste mixed with water is mixed up with dishwater when entering the tank. This tank does not either demonstrate such a rigidity and strength that the food-waste tank can be installed in the ground without requiring that a special pressure-equalisation slab be cast over the tank.

US 5,494,183 A describes double wall storage tank systems having an intermittently bonded wall. However, this tank is provided with a set of support ribs added to enhance the strength of the storage tank system. Even if it is a double walled tank, it is not formed by a screw wound element of duct, and does not provide for possibility of circulating a heat-exchange fluid through the duct forming the wall of the tank.

EP 1 533 252 A2 describes a method for making a large storage container of moulded plastics for use underground. The container is corrugated by a plurality of circumferential grooves arranged in planes substantially orthogonal to the longitudinal axis in order to obtaining an increased stiffness of the container. This tank is not a double walled tank and is not formed by a screw wound element of duct, and does therefore not provide for possibility of circulating a heat-exchange fluid through the duct forming the wall of the tank.

US 5,816,435 A describes a double wall tank for the storage of liquids being manufactured from a rigid inner tank by helically extruding a synthetic resin outer sheath over the inner tank. Even if the tank is double walled, it starts with an inner rigid tank on which a second wall is formed helically extruding a synthetic outer sheath, and the wall of the tank is consequently not formed by a screw wound double-walled duct element. This device does not either provide for the possibility of circulating a heat-exchange fluid through the duct forming the wall of the tank.

A double-walled pipe for a food-waste tank as has been described above can appropriately be formed through a square section of duct being wound in a screw form such that one side of the section of duct forms the inner surface in the pipe through the sections lying side by side to each other and being joined to each other by material. With a pipe manufactured in such a screw-formed manner, it is possible to use the duct that runs in screw form to lead a fluid out from and into the duct, for example at the ends of the tank, and it is then possible with the aid of a heat exchanger to exploit the heat that is present in the food-waste tank. Through the tank receiving food waste and dish-washing water, the contents normally have a high heat content, which can be exploited for the heating of spaces or of water. The temperature in the food-waste tank and fat separator is also in this way reduced, which improves the function and ability to separate components in the tanks. It is easier also for fat to separate from water at lower temperatures.

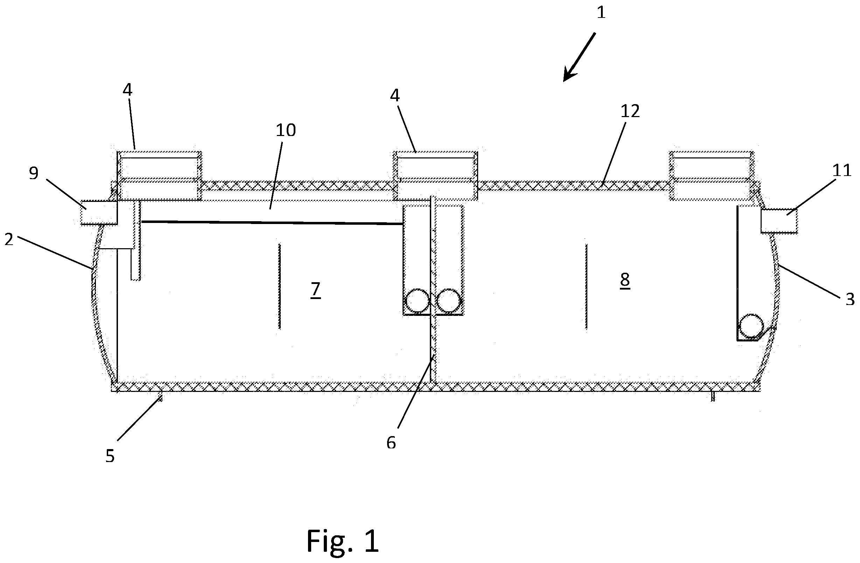

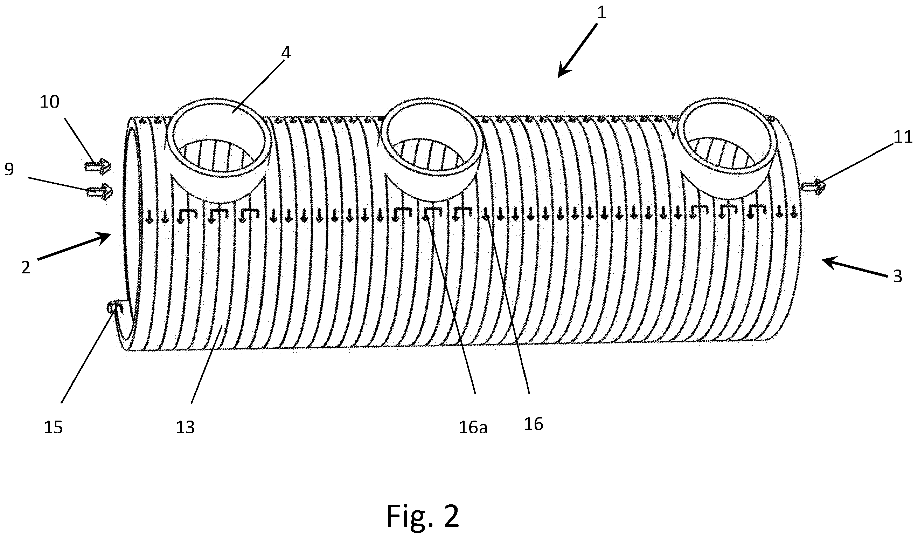

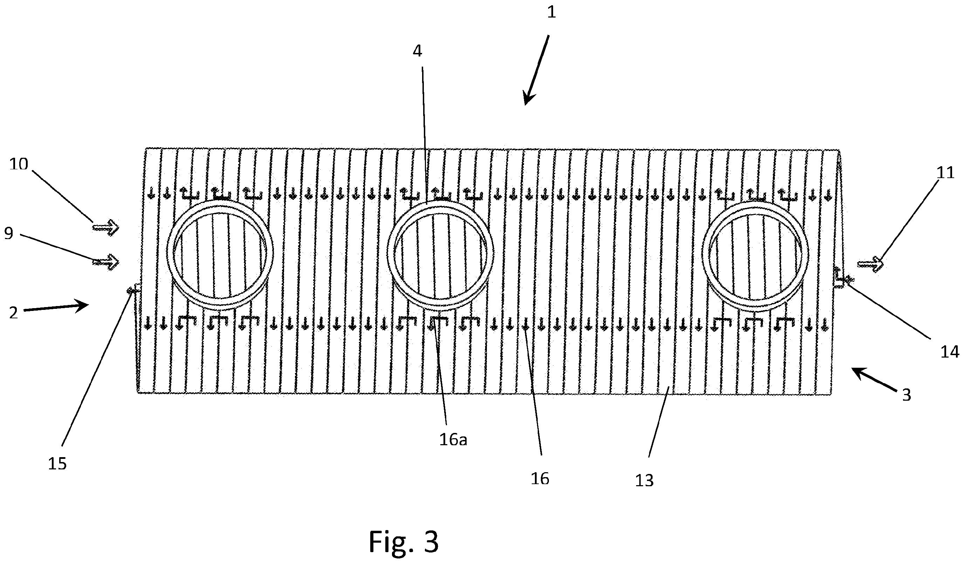

The invention will now be described in more detail in the form of a non-limiting embodiment that is illustrated with the aid of the attached drawings, where **Figure 1** shows a schematic longitudinal sectional view through a food-waste tank according to the invention with a separation arrangement. **Figure 2** shows a schematic perspective view obliquely from above of a food-waste tank according to the invention and essentially formed from a square section of duct that has been wound as a screw, and **Figure 3** shows a view corresponding to that of Figure 2 directly from above.

Thus, Figure 1 shows a longitudinal sectional view of a food-waste tank 1 according to the invention with a separation arrangement integrated into the tank, and Figure 2 shows a corresponding side view of the tank 1. The tank itself is constructed from a double-walled polyethylene pipe 12 with reinforcements between the two walls. The pipe 12 is in principle of the same type as that used for large road culverts, and is intended to be able to withstand heavy loads. This means that if the tank is buried in the ground, it is not necessary to cast a pressure-reducing slab over the tank, and, in the same way, if the tank is standing free it has sufficient integral rigidity and integral strength that it does not collapse on being filled with, for example, liquid contents.

The tank 1 is equipped at both of its ends with end walls 2, 3, and is equipped at its upper surface with towers 4, through which a slurry extraction pipe, for example, can be passed down into the tank in order to empty it of its contents. In the case in which the tank 1 is mounted above ground or on a floor surface, the tank rests on supports 5. A separating wall 6 is arranged inside the tank, which divides the interior of the tank 1 into a first chamber 7 and a second chamber 8.

Two inlets are arranged in what is the left end wall 2 in the drawing: a first inlet 9 and a second inlet. The first inlet 9 opens out into the first chamber 7 and is connected to a pipe that leads food waste into the first chamber. This pipe that leads food waste in can be connected to, for example, a food waste mill, and in this case supplies the food waste in a state in which it has been divided into pieces, together with water. The second inlet comes from an outlet for dish-washing water and supplies dish-washing water without a significant amount of food waste, although a certain amount of slurry may be present in this dish-washing water. The second inlet is connected inside the first chamber to a pipe 10 that passes directly through the first chamber 7 and the separating wall 6, and then opens out into the second chamber 8. The two inlets 9, 10 are located close to the top of the tank, such that the inflowing food waste and dish-washing water enter at the top of the relevant chamber 7 or 8. An outlet 11 for water that can be led onwards to, for example, a municipal waste-water network is arranged in the right end wall 3.

With a food-waste tank according to the invention and one that comprises a separation arrangement, it is possible to achieve a system with very low vertical fall through the complete separation arrangement and food-waste tank.

Figures 2 and 3 show the principle of how the cylindrical double-walled pipe 12 of the food-waste tank, which constitutes the extended jacket of the food-waste tank, is formed, according to one preferred embodiment of the invention, from a, preferably square, element of duct 13 wound as a screw. This element 13 of duct is wound such that one of its sides forms the inner surface of the double-walled pipe, and the opposite side forms the outer surface of the pipe, while the intermediate sides are glued or welded to each other. There is thus formed in this way a closed duct that passes as a tightly wound screw around the cylindrical interior of the tank 1, and each one of the ends 14, 15 of the element of duct 13 is located close to an end wall 2, 3 of the tank 1.

If it is intended to use the screw-wound element 13 of duct to lead a heat-exchange medium through the interior of the duct element, its end 15 located at the end wall 3 thus constitutes the inlet to the element of duct, while its other end 14 located close to the end wall 2 constitutes the outlet from the element 13 of duct. The principal direction of flow of the food waste and the water that is to be separated in the tank 1 is, it must be remembered, from the inlet 9 in the end wall 2 to the outlet 11 in the end wall 3, and it is thus appropriate that a heat-exchange medium be allowed to flow in the opposite direction through the outer wall of the tank 1, i.e. through the element 13 of duct, as is shown by the arrows 16 drawn on the outer surface of the element 13 of duct in order to illustrate the direction of flow of the heat-exchange medium.

As has been described above, the tank 1 is provided at its upper surface with towers 4, through which it is possible to lower, for example, a slurry extraction pipe into the tank 1. These towers, naturally, create problems when the outer jacket of the tank is formed as a screw-wound element 13 of duct, since the openings at the towers 4 must pass through the element of duct. It is, however, easy to solve this problem by designing the diameter of the openings at the towers 4 such that it corresponds to an even number of widths of the section of duct. The elements 13 of duct are closed at these openings of the towers (4) and the elements of duct have pairwise openings in the walls of the duct next to the closure in order to form a connection between two neighbouring ducts such that the flow through the interior of the element of duct at the openings 4 of the towers changes direction, as is suggested by the arrows 16a showing the flow, as made clear in Figures 2 and 3. The heat-exchange fluid in this way thus flows in opposing directions in two neighbouring elements of duct.

The heat-exchange medium that flows through the outer jacket of the tank 1, i.e. through the element 13 of duct, may be, for example, water or another heat-exchange fluid, and it is appropriate that the fluid is led from the outlet at the end 14 of the element of duct to a heat exchanger, not shown in the drawings, in order to be used for an appropriate heating purpose.

A double-walled pipe such as that described above with connections to lead a fluid in through a jacket on the pipe can be used not only for food waste: it would be possible to use this principle also for ordinary waste-water pipes in which heated contents are to be led out, in order to make use of the heat content inside the pipe.

## Claims

1. A food-waste tank (1) with at least two chambers (7, 8) located one after the other separated by an internal separating wall (6) and comprising a first inlet (9) for food waste mixed with water and an end wall (2, 3) at each end that seals the tank (1), wherein the internal separating wall (6) extends essentially over the complete diameter of the tank (1), dividing the food-waste tank into two chambers (7, 8), one of which follows the other, **characterised in that** the food-waste tank comprises a second inlet (10) principally for dish-washing water without food waste, wherein the food-waste tank (1) is formed by an extended double-walled pipe (12) formed by an element (13) of duct, preferably square, wound as a screw, such that one side of the sides of the element of duct forms the inner surface of the double walled pipe, and the opposite side forms the outer surface of the pipe, while the intermediate sides are glued or welded to each other.

2. The food-waste tank according to claim 1, **characterised in that** the double-walled pipe (12) is a pipe manufactured from polyethylene and with reinforcements arranged between the two walls in the double-walled pipe (12) formed by the screw wound element (13).

3. The food-waste tank according to claim 1 or 2, **characterised in that** connections (14, 15) are arranged to the interior of the element of duct in order to lead a heat-exchange fluid into and out from the interior of the element (13) of duct.

4. The food-waste tank according to claim 3, **characterised in that** a first (2) of the end walls of the tank (1) comprises the inlets (9; 10) to the interior of the tank and a second (3) end wall comprises outlets (11) from the interior of the tank, and **in that** the inlet of the connection (15) to the interior of the screw-wound element (13) of duct is arranged next to the second end wall (3) while the outlet of the connection (14) from the interior of the screw-wound element (13) of duct is arranged next to the first end wall (2).

5. The food-waste tank according to claim 4, **characterised in that** the tank (1) is provided at its upper part with openings of towers (4), and **in that** the elements (13) of duct are closed at these openings of the towers (4) and **in that** the elements of duct have pairwise openings in the walls of the duct next to the closure in order to form a connection between two neighbouring ducts.

6. The food-waste tank according to claim 5, **characterised in that** the diameter of the openings of the towers (4), corresponds to the width of an even number of elements (13) of duct.

7. The food-waste tank according to claim 6, **characterised in that** in elements (13) of duct that are closed against an opening of a tower (4) the heat-exchange fluid flows in opposing directions (16a) in two neighbouring elements of duct.

8. The food-waste tank according to any one of claims 4-7, **characterised in that** the outlet of the connection (14) from the screw-wound element (13) of duct is connected to a heat exchanger in order to lead the heat-exchange fluid onwards to the heat exchanger.

## Patentansprüche

1. Lebensmittelabfalltank (1) mit wenigstens zwei Kammern (7, 8), die nacheinander durch eine innere Trennwand (6) getrennt angeordnet sind und einen ersten Einlass (9) für mit Wasser gemischte Lebensmittelabfälle und an jedem Ende eine Endwand (2 3) zum Abdichten des Tanks (1) aufweisen, wobei sich die innere Trennwand (6) im Wesentlichen über den gesamten Durchmesser des Tanks (1) erstreckt und den Lebensmittelabfalltank in zwei Kammern (7, 8) unterteilt, von denen eine der anderen folgt,
**dadurch gekennzeichnet, dass**
der Lebensmittelabfalltank einen zweiten Einlass (10), hauptsächlich für Geschirrspülwasser ohne Lebensmittelabfälle, umfasst, wobei
der Lebensmittelabfalltank (1) durch ein verlängertes doppelwandiges Rohr (12) gebildet ist, das durch ein Element (13) eines Kanals gebildet ist, das vorzugsweise quadratisch und wie eine Schraube gewickelt ist, so dass eine Seite der Seiten des Kanalelements die Innenfläche des doppelwandigen Rohres bildet, und die gegenüberliegende Seite die Außenfläche des Rohres bildet, während die Zwischenseiten miteinander verklebt oder verschweißt sind.

2. Lebensmittelabfalltank nach Anspruch 1, **dadurch gekennzeichnet, dass** das doppelwandige Rohr (12) ein Rohr aus Polyethylen und mit Verstärkungen ist, die zwischen den beiden Wänden im doppelwandigen Rohr (12) angeordnet sind, das durch das wie eine Schraube gewickelte Element (13) gebildet wird.

3. Lebensmittelabfalltank nach Anspruch 1 oder 2, **dadurch gekennzeichnet, dass** Anschlüsse (14, 15) zum Inneren des Kanalelements angeordnet sind, um ein Wärmetauscherfluid in das Innere und aus dem Inneren des Kanalelements (13) zu leiten.

4. Lebensmittelabfalltank nach Anspruch 3, **dadurch gekennzeichnet, dass** eine erste (2) der Endwände des Tanks (1) die Einlässe (9; 10) zum Inneren des Tanks umfasst und eine zweite (3) Endwand Auslässe (11) aus dem Inneren des Tanks umfasst, und dass der Einlass des Anschlusses (15) zum Inneren des wie eine Schraube gewickelten Elements (13) des Kanals neben der zweiten Endwand (3) angeordnet ist, während der Auslass des Anschlusses (14) aus dem Inneren des wie eine Schraube gewickelten Elements (13) des Kanals neben der ersten Endwand (2) angeordnet ist.

5. Lebensmittelabfalltank nach Anspruch 4, **dadurch gekennzeichnet, dass** der Tank (1) an seinem oberen Teil mit Öffnungen von Türmen (4) versehen ist, und dass die Elemente (13) des Kanals an diesen Öffnungen der Türme (4) geschlossen sind und dass die Elemente des Kanals paarweise Öffnungen in den Wänden des Kanals neben dem Verschluss aufweisen, um eine Verbindung zwischen zwei benachbarten Kanälen herzustellen.

6. Lebensmittelabfalltank nach Anspruch 5, **dadurch gekennzeichnet, dass** der Durchmesser der Öffnungen der Türme (4) der Breite einer geraden Anzahl von Elementen (13) des Kanals entspricht.

7. Lebensmittelabfalltank nach Anspruch 6, **dadurch gekennzeichnet, dass** in Elementen (13) des Kanals, die gegen eine Öffnung eines Turms (4) geschlossen sind, das Wärmetauscherfluid in entgegengesetzten Richtungen (16a) in zwei benachbarten Elementen des Kanals strömt.

8. Lebensmittelabfalltank nach einem der Ansprüche 4 - 7, **dadurch gekennzeichnet, dass** der Auslass des Anschlusses (14) aus dem wie eine Schraube gewickelten Element (13) des Kanals mit einem Wärmetauscher verbunden ist, um das Wärmetauscherfluid weiter zum Wärmetauscher zu führen.

## Revendications

1. Bac de déchets alimentaires (1) avec au moins deux chambres (7, 8) positionnées l'une après l'autre, séparées par une paroi de séparation interne (6) et comprenant une première entrée (9) pour les déchets alimentaires mélangés avec de l'eau et une paroi d'extrémité (2, 3) à chaque extrémité qui scelle le bac (1), dans lequel la paroi de séparation interne (6) s'étend essentiellement sur tout le diamètre du bac (1) divisant le bac de déchets alimentaires en deux chambres (7, 8), dont l'une suit l'autre, **caractérisé en ce que** le bac de déchets alimentaires comprend une seconde entrée (10) principalement pour l'eau de vaisselle sans déchets alimentaires, dans lequel :
le bac de déchets alimentaires (1) est formé par un tuyau étendu à double paroi (12) formé par un élément (13) de conduit, de préférence carré, enroulé comme une vis, de sorte qu'un côté des côtés de l'élément de conduit forme la surface interne du tuyau à double paroi, et le côté opposé forme la surface externe du tuyau, alors que les côtés intermédiaires sont collés ou soudés entre eux.

2. Bac de déchets alimentaires selon la revendication 1, **caractérisé en ce que** le tuyau à double paroi (12) est un tuyau fabriqué à partir de polyéthylène et avec des renforcements agencés entre deux parois dans le tuyau à double paroi (12) formé par l'élément enroulé de vis (13).

3. Bac de déchets alimentaires selon la revendication 1 ou 2, **caractérisé en ce que** les raccordements (14, 15) sont agencés à l'intérieur de l'élément de conduit afin de conduire à un fluide d'échange thermique à l'intérieur et à l'extérieur de l'intérieur de l'élément (13) de conduit.

4. Bac de déchets alimentaires selon la revendication 3, **caractérisé en ce qu'**une première (2) des parois d'extrémité du bac (1) comprend les entrées (9; 10) à l'intérieur du bac et une seconde paroi d'extrémité (3) comprend les sorties (11) de l'intérieur du bac, et **en ce que** l'entrée du raccordement (15) à l'intérieur de l'élément enroulé de vis (13) du conduit est agencée à proximité de la seconde paroi d'extrémité (3) alors que la sortie du raccordement (14) de l'intérieur de l'élément enroulé de vis (13) de conduit est agencée à proximité de la première paroi d'extrémité (2).

5. Bac de déchets alimentaires selon la revendication 4, **caractérisé en ce que** le bac (1) est prévu au niveau de sa partie supérieure avec des ouvertures de tours (4), et **en ce que** les éléments (13) de conduit sont fermés au niveau de ces ouvertures des tours (4) et **en ce que** les éléments de conduit ont des ouvertures en paire dans les parois du conduit à proximité de la fermeture afin de former un raccordement entre deux conduits voisins.

6. Bac de déchets alimentaires selon la revendication 5, **caractérisé en ce que** le diamètre des ouvertures des tours (4) correspond à la largeur d'un nombre pair d'éléments (13) de conduit.

7. Bac de déchets alimentaires selon la revendication 6, **caractérisé en ce que** dans les éléments (13) de conduit qui sont fermés contre une ouverture d'une tour (4), le fluide d'échange thermique s'écoule dans des directions opposées (16a) dans deux éléments de conduit voisins.

8. Bac de déchets alimentaires selon l'une quelconque des revendications 4 à 7, **caractérisé en ce que** la sortie du raccordement (14) de l'élément enroulé de vis (13) de conduit est raccordée à un échangeur de chaleur afin de conduire le fluide d'échange thermique vers l'échangeur de chaleur.
